# FASCICULE DE BREVET EUROPEEN

(11) **EP 3 722 394 B1**
(45) Date de publication et mention de la délivrance du brevet: **03.11.2021**
(21) Numéro de dépôt: 20168048.5
(22) Date de dépôt: 03.04.2020
(51) Int. Cl.: C10G 45/04, B01J 8/04, B01J 35/10, B01J 23/85, C10G 65/04, B01J 23/883, B01J 37/02

(54) **PROCÉDÉ D'HYDROTRAITEMENT D'UN NAPHTA**
HYDROTREATING-VERFAHREN EINES ROHBENZINS
METHOD FOR HYDROTREATMENT OF A NAPHTHA

(30) Priorité: 12.04.2019 FR 1903928
(43) Date de publication de la demande: 14.10.2020
(73) Titulaire: AXENS, 92508 Rueil-Malmaison Cedex (FR)
(72) Inventeur: DUBIN, Geoffroy, HOUSTON, 77056 (US); HESSE, BORIS, 92500 RUEIL-MALMAISON (FR); PUCCI, Annick, 92500 RUEIL-MALMAISON (FR)
(74) Mandataire: IFP Energies nouvelles

(56) Documents cités:
- US-A- 3 563 887
- US-A1- 2008 004 476
- US-A1- 2016 075 955

## Description

### Domaine technique

La présente invention concerne un procédé et une unité d'hydrotraitement d'une charge hydrocarbonée telle qu'un naphta. Plus particulièrement, la présente invention concerne un procédé d'hydrotraitement d'une charge de naphta utilisant un ou plusieurs réacteurs fonctionnant en catalyse hétérogène dans un lit fixe comprenant au moins trois couches catalytiques.

### Technique antérieure

Afin d'être compétitif, un procédé d'hydrotraitement de naphta doit assurer un taux élevé de désulfuration, d'hydrogénation des oléfines et d'élimination des impuretés éventuellement contenues dans la charge.

Les composés soufrés résiduels dans le naphta après désulfuration par catalyse comprennent des mercaptans de recombinaison, provenant de la réaction du H2S, formé pendant la réaction, avec les oléfines de la charge n'ayant pas réagi ou les oléfines formées pendant le procédé d'hydrotraitement. De plus, certaines impuretés, telles que le silicium, peuvent s'accumuler dans les lits de catalyseurs et finalement, empoisonner lesdits lits.

Le brevet FR2872516 décrit un procédé pour la désulfuration d'essences comprenant des oléfines. Le procédé est destiné à réduire au minimum la teneur des composés les plus réfractaires à l'hydrodésulfuration, tels que les composés thiophènes et les mercaptans de recombinaison, résultant de l'ajout de H2S aux oléfines tout en limitant le degré d'hydrogénation des oléfines. Le procédé comprend au moins deux étapes : une première étape d'hydrodésulfuration A qui est suivie par une deuxième étape B, de sorte que le catalyseur de l'étape B ait une activité catalytique dans la conversion de thiophènes comprise entre 1 % et 50 % de l'activité du catalyseur de l'étape A.

Le brevet US 4 446 005 décrit un procédé qui comprend, en combinaison, l'hydrotraitement de naphta, un piège à soufre et une unité de reformage. Une étape d'hydrotraitement de naphta située en amont de l'unité de reformage est utilisée pour traiter un naphta contenant du soufre pour éliminer la majeure partie du soufre. Un piège à soufre contenant un catalyseur au nickel est mis en œuvre, en aval de ladite étape d'hydrotraitement, sur la ligne de naphta partiellement désulfuré pour éliminer le soufre du naphta. Un lit de protection final est situé en aval de, et en série avec, le piège à soufre contenant un catalyseur au nickel pour éliminer le complexe organo-soufre-nickel formé dans le piège à soufre contenant un catalyseur au nickel en cas de disfonctionnement de l' unité d'hydrotraitement de naphta.

US 2008/004476 divulgue un procédé et une unité d'hydrotraitement.

L'objectif de l'invention est de fournir un procédé d'hydrotraitement de naphta amélioré tout en prolongeant la durée de vie du catalyseur d'hydrotraitement.

### Résumé de l'invention

Le procédé selon l'invention est un procédé d'hydrotraitement de naphta, utilisant au moins trois catalyseurs. Chacun desdits catalyseurs est caractérisé par sa « surface spécifique chargée », désignée par L1, L2 et L3 respectivement, correspondant à sa surface spécifique en masse multipliée par sa masse volumique chargée. Ledit procédé comprend trois étapes successives :
- une première étape a) en présence du premier catalyseur, ledit premier catalyseur comprenant un support et optionnellement une phase active, ladite phase active (optionnelle donc) contenant au moins un métal du groupe 6 et optionnellement au moins un métal du groupe 9 ou 10 ;
- une deuxième étape b) en présence du deuxième catalyseur, ledit deuxième catalyseur comprenant un support et une phase active, ladite phase active contenant au moins un métal du groupe 9 ou 10 et au moins un métal du groupe 6 ;
- une troisième étape c) en présence du troisième catalyseur, ledit troisième catalyseur comprenant un support et une phase active, ladite phase active contenant au moins un métal du groupe 6 et optionnellement au moins un métal du groupe 9 ou 10 ;
tel que :
- la teneur en métal du groupe 6 du troisième catalyseur est inférieure à la teneur en métal du groupe 6 du deuxième catalyseur ;
- le rapport L₁/L₂ de la « surface spécifique chargée » dudit premier catalyseur sur la « surface spécifique chargée » dudit deuxième catalyseur est supérieur ou égal à 1,20, de préférence supérieur ou égal à 1,35 ;
- et le rapport L₃/L₂ de la « surface spécifique chargée » dudit troisième catalyseur sur la « surface spécifique chargée » dudit deuxième catalyseur est supérieur à 1,07, préférentiellement supérieur ou égal à 1,20, plus préférentiellement supérieur ou égal à 1,35.

La «surface spécifique chargée» de chaque catalyseur est la multiplication de la surface spécifique («surface area» selon la terminologie anglo-saxonne) en masse du catalyseur par sa masse volumique chargée («loaded density» selon la terminologie anglo-saxonne). Elle est utilisée pour caractériser la surface spécifique efficace disponible pour la réaction dans un volume donné.

De façon inattendue, contrairement à l'art antérieur, le procédé comprenant trois étapes comme décrit permet, avec un volume de catalyseur donné :
- d'améliorer les performances du procédé d'hydrotraitement, ce qui conduit à une durée de vie plus longue du catalyseur et, par conséquent, un besoin réduit de remplacement du catalyseur du procédé d'hydrotraitement de naphta, ce qui signifie un temps en opération augmenté ;
- de réduire la quantité de mercaptans recombinants, en particulier dans la troisième étape ;
- de piéger une quantité plus grande d'impuretés, en particulier le silicium et l'arsenic, en particulier pendant les première et troisième étapes.

Ces avantages sont obtenus grâce à la synergie entre les critères de surface spécifique chargée et les critères de teneur en métal des catalyseurs dans chacune des trois étapes.

Avantageusement, la phase active du troisième catalyseur contient au moins un métal du groupe 9 ou 10, de sorte que la teneur en métal du groupe 9 plus 10 du troisième catalyseur est inférieure à la teneur en métal du groupe 9 plus 10 du deuxième catalyseur.

Avantageusement, la vitesse spatiale horaire liquide (« liquid hourly space velocity» selon la terminologie anglo-saxonne) de la première étape est inférieure ou égale à 20 fois la vitesse spatiale horaire liquide globale, de préférence inférieure ou égale à 10 fois et/ou supérieure ou égale à 1,33 fois, de préférence supérieure ou égale à 1,66 fois la vitesse spatiale horaire du liquide globale.

Avantageusement, la vitesse spatiale horaire liquide de la deuxième étape est inférieure ou égale à 4 fois la vitesse spatiale horaire liquide globale, de préférence inférieure ou égale à 2,5 fois et/ou supérieure ou égale à 1,33 fois la vitesse spatiale horaire du liquide globale.

Avantageusement, la vitesse spatiale horaire liquide de la troisième étape est supérieure ou égale à 5 fois la vitesse spatiale horaire liquide globale, de préférence supérieure ou égale à 6,66 fois et/ou inférieure ou égale à 20 fois et de préférence, inférieure ou égale à 14,29 fois la vitesse spatiale horaire du liquide globale.

Avantageusement, le premier et/ou le troisième catalyseur sont supportés au moins partiellement sur un support d'alumine. De préférence, leur phase active contient du molybdène uniquement, ou du nickel et du molybdène, ou du cobalt et du molybdène, ou du nickel et du cobalt et du molybdène.

Avantageusement, le deuxième catalyseur est supporté au moins partiellement sur un support d'alumine. De préférence, sa phase active contient du nickel et du molybdène, ou du cobalt et du molybdène, ou du nickel et du cobalt et du molybdène.

Avantageusement, le naphta comprend des hydrocarbures bouillant dans la plage du naphta et comprend de 10 à 50 000 ppm en poids ou en volume d'un ou plusieurs composés soufrés.

Avantageusement, le naphta comprend une charge de naphta craquée, seule ou en mélange avec d'autres charges de naphta. L'amélioration obtenue par le procédé selon l'invention par rapport à l'art antérieur est encore plus grande pour des charges qui sont difficiles à traiter telles que le naphta craqué. La charge de naphta craquée comprend typiquement du Coker naphta provenant d'une unité de cokéfaction retardée (« Delayed Coker Unit » selon la terminologie anglo-saxonne).

Dans un premier mode de réalisation du procédé selon l'invention, le premier catalyseur comprend une phase active. Ladite phase active contient au moins un métal du groupe 6 et de préférence, au moins un métal du groupe 9 ou 10, de sorte que la teneur en métal du groupe 6 du premier catalyseur soit inférieure ou égale à la teneur en métal du groupe 6 dudit deuxième catalyseur. Le rôle du métal du groupe 6 sur le premier catalyseur est d'équilibrer l'activité du premier catalyseur entre les réactions d'hydrogénation, d'hydrotraitement et d'élimination des impuretés.

Selon une première variante du premier mode de réalisation, la phase active du premier catalyseur contient au moins un métal du groupe 9 ou 10, de sorte que :
- la teneur en métal du groupe 9 ou 10 de ladite phase active du premier catalyseur est supérieure ou égale à 0,5 % en poids et inférieure à 3 % en poids ;
- la teneur en métal du groupe 9 plus 10 de ladite phase active du premier catalyseur est inférieure à la teneur en métal du groupe 9 plus 10 dudit deuxième catalyseur.

Dans cette première variante, la teneur en métal du groupe 6 dudit premier catalyseur est, de préférence, supérieure ou égale à 0,5 % poids et/ou, de préférence, inférieure ou égale à 6 % en poids.

Dans cette première variante, la première étape du procédé présente une activité bien équilibrée entre les réactions d'hydrogénation, d'hydrotraitement et d'élimination des impuretés, grâce à la synergie entre la teneur en métal du groupe 6 et du groupe 9 ou 10 de la phase active et la « surface spécifique chargée » élevée du premier catalyseur.

Selon une deuxième variante du premier mode de réalisation, la phase active du premier catalyseur contient au moins un métal du groupe 9 ou 10, de sorte que :
- la teneur en métal du groupe 9 ou 10 dudit premier catalyseur est supérieure ou égale à 3 % en poids et inférieure ou égale à 9 % en poids
- la teneur en métal du groupe 9 plus 10 du premier catalyseur est supérieure à la teneur en métal du groupe 9 plus 10 dudit deuxième catalyseur.

Dans ce mode de réalisation, l'empilement du catalyseur est bien adapté pour traiter des "charges de naphta non conventionnelles" contenant des impuretés telles que l'arsenic et le silicium.

Dans cette deuxième variante du premier mode de réalisation, la teneur en métal du groupe 6 dudit premier catalyseur est, de préférence, supérieure ou égale à 6 % en poids, plus préférablement supérieure ou égale à 7,5 % en poids et/ou, de préférence, inférieure ou égale à 10 % en poids, plus préférablement inférieure ou égale à 9,5 % en poids. Dans ce cas, la teneur en métal du groupe 6 du premier catalyseur est bien adaptée pour traiter les «charges de naphta non conventionnelles». De tels agencements de chargements de métaux du groupe 6 et du groupe 9 ou 10 permettent de maintenir une activité élevée d'hydrogénation et de désulfuration, même si le premier catalyseur est empoisonné par le taux plus élevé d'impuretés présent dans les «charges de naphta non conventionnelles».

Dans un deuxième mode de réalisation du procédé selon l'invention, le premier catalyseur est constitué d'un support sans phase active. Le premier catalyseur est alors bien adapté pour éliminer les impuretés grâce à la nature de son support uniquement. La fabrication du premier catalyseur dans ce cas ne nécessite pas l'imprégnation de métal, ce qui réduit le coût et la durée de fabrication. Dans ce deuxième mode de réalisation, le support du premier catalyseur est constitué d'un support sans phase active et sans métal du groupe 6, 9 et 10. Le support du premier catalyseur lui-même peut être constitué, au moins en partie, d'un oxyde métallique tel que l'alumine et peut contenir une quantité très limitée de métal, faisant partie des impuretés du support, par exemple une teneur totale en métal inférieure à 50 ppm en poids. Dans ce deuxième mode de réalisation, la somme des teneurs en métal du groupe 6 et en métal du groupe 9 ou 10 du premier catalyseur est inférieure ou égale à 0,01 % en poids, de préférence inférieure ou égale à 0,005 % en poids.

L'objet de l'invention est en également un procédé d'hydrotraitement d'un naphta, comprenant un procédé d'hydrotraitement de naphta comme décrit ci-dessus, pour produire un naphta hydrodésulfuré, ledit procédé comprenant une ou plusieurs des étapes préliminaires suivantes :
- une étape optionnelle d'hydrogénation des dioléfines produisant un naphta ayant une teneur réduite en dioléfines ;
- une ou plusieurs étapes optionnelles de séparation et/ou chauffage et/ou refroidissement ;
et une ou plusieurs des étapes supplémentaires suivantes :
- une étape de séparation d'au moins une partie du naphta hydrodésulfuré pour l'élimination de H₂S et la production optionnelle d'une coupe de GPL et/ou d'un flux non condensable ;
- une étape optionnelle de séparation du naphta hydrodésulfuré en au moins deux coupes de naphta.

L'objet de l'invention concerne en outre une unité d'hydrotraitement de naphta, adaptée pour mettre en œuvre le procédé décrit ci-dessus, comprenant une section réactionnelle contenant au moins trois catalyseurs, lesdits catalyseurs étant chargés sur des première, deuxième et troisième couches de catalyseur successives et chacun desdits catalyseurs étant caractérisé par sa « surface spécifique chargée » , désignée par L₁, L₂ et L₃ respectivement, correspondant à sa surface spécifique en masse multipliée par sa masse volumique chargée,

ladite charge de naphta étant mise en contact dans ladite section réactionnelle successivement avec :
- la première couche de catalyseur, ledit premier catalyseur comprenant un support et optionnellement, une phase active, ladite phase active contenant au moins un métal du groupe 6 et de préférence, au moins un métal du groupe 9 ou 10 ;
- la deuxième couche de catalyseur, ledit deuxième catalyseur comprenant un support et une phase active, ladite phase active contenant au moins un métal du groupe 9 ou 10 et au moins un métal du groupe 6 ;
- la troisième couche de catalyseur, ledit troisième catalyseur comprenant un support et une phase active, ladite phase active contenant au moins un métal du groupe 6 et optionnellement, au moins un métal du groupe 9 ou 10,
telle que :
- la teneur en métal du groupe 6 du troisième catalyseur est inférieure à la teneur en métal du groupe 6 du deuxième catalyseur ;
- le rapport L₁/L₂ de la « surface spécifique chargée » de ladite première couche de catalyseur sur la « surface spécifique chargée » de ladite deuxième couche de catalyseur est supérieur ou égal à 1,20, de préférence supérieur ou égal à 1,35 ;
- le rapport L₃/L₂ de la « surface spécifique chargée » de ladite troisième couche de catalyseur sur la « surface spécifique chargée » de ladite deuxième couche de catalyseur est supérieur à 1,07, de préférence supérieur ou égal à 1,20, de préférence supérieur ou égal à 1,35.

L'unité d'hydrotraitement de naphta selon l'invention présente les mêmes avantages que ceux décrits pour le procédé d'hydrotraitement de naphta.

L'unité d'hydrotraitement de naphta est bien adaptée pour mettre en œuvre le procédé décrit ci-dessus et tous ses modes de réalisation.

Avantageusement, les première, deuxième et troisième couches de catalyseur sont chargées dans au moins un réacteur opérant avec un lit catalytique fixe et en flux axial, notamment un réacteur unique.

Selon un premier mode de réalisation de l'unité, les trois couches de catalyseurs sont empilées dans un lit de catalyseur unique.

Selon un deuxième mode de réalisation de l'unité, les trois couches de catalyseurs sont distribuées entre une ou plusieurs réacteurs. Avantageusement, un premier lit fixe de catalyseur dans un premier réacteur contient la première couche de catalyseur et un deuxième lit fixe de catalyseur dans un deuxième réacteur contient les deuxième et troisième couches de catalyseur. Dans un autre exemple, le premier réacteur contient les première et deuxième couches de catalyseur et le deuxième réacteur contient la troisième couche de catalyseur.

Selon un troisième mode de réalisation de l'unité, au moins l'une des couches de catalyseur est divisée entre deux réacteurs. Par exemple, un premier lit fixe de catalyseur dans un premier réacteur contient la première et au moins une partie de la deuxième couche de catalyseur et un deuxième lit fixe dans un deuxième réacteur contient la quantité restante de la deuxième couche de catalyseur et la troisième couche de catalyseur.

Selon un autre mode de réalisation de l'unité, chaque couche de catalyseur est chargée dans un réacteur séparé.

Avantageusement, le volume du premier catalyseur est inférieur ou égale à 75 % de la somme du volume des premier, deuxième et troisième catalyseurs, de préférence inférieur ou égal à 60 % et/ou supérieur ou égal à 5 %, de préférence supérieur ou égal à 10 %.

Avantageusement, le volume du deuxième catalyseur est supérieur ou égal à 25 % de la somme du volume des premier, deuxième et troisième catalyseurs, de préférence supérieur ou égal à 40 % et/ou inférieur ou égal à 75 % de la somme du volume des premier, deuxième et troisième catalyseurs.

Avantageusement, le volume du troisième catalyseur est supérieur ou égal à 5 % du volume total de catalyseur, de préférence supérieur ou égal à 7 % et/ou inférieur ou égal à 20 % et de préférence, inférieur ou égal à 15 % de la somme du volume des premier, deuxième et troisième catalyseurs.

Dans un mode de réalisation du procédé et de l'unité selon l'invention, dédié aux charges conventionnelles, le volume du premier catalyseur peut être égal ou supérieur à 5% et égal ou inférieur à 60 % du volume total de catalyseur, le volume du deuxième catalyseur peut être égal ou supérieur à 33 % et égal ou inférieur à 75 % du volume total de catalyseur et le volume du troisième catalyseur peut être égal ou supérieur à 5 % et égal ou inférieur à 15 % du volume total de catalyseur.

Dans un mode de réalisation du procédé et de l'unité selon l'invention, dédié au « naphta non conventionnel », le volume du premier catalyseur peut être égal ou supérieur à 20% et égal ou inférieur à 60 % du volume total de catalyseur, le volume du deuxième catalyseur peut être égal ou supérieur à 33 % et égal ou inférieur à 66% du volume total de catalyseur et le volume du troisième catalyseur peut être égal ou supérieur à 5 % et égal ou inférieur à 20% du volume total de catalyseur. Dans un autre mode de réalisation du procédé et de l'unité selon l'invention, les premier, deuxième et troisième catalyseurs comprennent une phase active contenant au moins un métal du groupe 6.

### Définitions :

Dans l'ensemble du présent texte, les indices des couches de catalyseur sont ordonnés dans l'ordre d'écoulement du fluide traité.

Dans l'ensemble du présent texte, les « étapes successives » ou « couches successives » signifient que l'effluent d'une couche ou d'une étape est passé à l'étape suivante ou la couche suivante sans réaction ou séparation ou dégazage intermédiaire de l'effluent de la couche ou étape précédente. Cependant, afin d'ajuster la température à l'entrée d'une couche ou d'une étape, ou à l'intérieure d'une couche de catalyseur quand c'est requis, un flux de trempe vapeur ou liquide optionnel (« vapor or liquid quench » selon la terminologie anglo-saxonne) peut être ajouté à l'effluent de l'étape ou couche précédente, ou à l'intérieure de la couche ou de l'étape, comme requis.

Dans l'ensemble du présent texte, la masse volumique d'un catalyseur est définie comme étant la masse de catalyseur par unité de volume de catalyseur. La «masse volumique chargée» d'un catalyseur correspond à la masse de catalyseur chargée dans un volume par unité dudit volume. Elle est calculée en divisant la masse de catalyseur qui a été chargée dans un volume par ledit volume. La « masse volumique chargée » peut varier suivant le mode de chargement qui a été utilisé. Lorsque le catalyseur est chargé sans aucun contrôle de sa distribution, par gravité, sa masse volumique chargée est inférieure à la masse volumique chargée obtenue lorsque le catalyseur est chargé dans le même volume avec une distribution uniforme et compacte, en utilisant un dispositif de chargement dense. Par exemple, la masse volumique chargée d'un catalyseur d'une couche donnée de catalyseur dans une section réactionnelle correspond à la masse de catalyseur dans ladite couche divisée par le volume de ladite couche.

Dans l'ensemble du présent texte, la surface spécifique en masse du catalyseur est déterminée selon la norme ASTM D-3663. La surface spécifique correspond à une définition de SBET Brunauer, Emmett et Teller (BET), d'une monocouche de N₂ adsorbée à la surface du catalyseur par physisorption.

Dans l'ensemble du présent texte, nous utilisons le critère de «surface spécifique chargée» exprimée en m²/m³. Ledit critère est défini comme étant la masse volumique chargée (exprimée en kg/m³) multipliée par la surface spécifique du catalyseur exprimée en m²/kg. Ce critère est noté sous la forme Lₙ où n est l'indice de la couche de catalyseur correspondante.

Dans l'ensemble du présent texte, le rapport de la «surface spécifique chargée» de deux couches de catalyseur successives est noté, par exemple, Lₙ₊₁/Lₙ correspondant au rapport de la «surface spécifique chargée» pour les catalyseurs de la couche n et de la couche n+1. Avantageusement, ce critère est supérieur ou égal à 0,5 et/ou inférieur ou égal à 3.

Dans l'ensemble du présent texte, toutes les teneurs en métaux sont exprimées en poids sous forme d'oxyde. Pour un catalyseur calciné, la teneur en poids de métal sous forme d'oxyde correspond à la teneur en oxyde métallique sur le catalyseur lui-même. Pour un catalyseur contenant un additif adjuvant (« booster additive » selon la terminologie anglo-saxonne), le métal en poids sous forme d'oxyde correspond à la teneur en oxyde métallique du précurseur du catalyseur (le support après imprégnation de sels métalliques) après une étape de calcination.

Dans l'ensemble du présent texte, la teneur en métal sur le catalyseur ne tient pas compte du métal qui peut être présent en tant qu'impuretés mineures dans le catalyseur.
Dans l'ensemble du présent texte, une « charge de naphta conventionnelle » désigne une charge de naphta ayant un taux limité d'impuretés, telles que, typiquement une teneur en soufre comprise entre 10 ppm et 5 000 ppm. Typiquement, un naphta direct (« straight-run naphta » selon la terminologie anglo-saxonne) provenant d'une distillation atmosphérique de pétrole brut est une charge de naphta conventionnelle.

Dans l'ensemble du présent texte, une « charge de naphta non conventionnelle » désigne une charge de naphta qui nécessite des conditions de fonctionnement particulièrement sévères, en raison de sa composition ou de la nature et/ou du taux de ses impuretés. Typiquement, ces naphtas proviennent d'unités de traitement d'hydrocarbures, par exemple, d'unités de traitement catalytique et/ou thermique et/ou biologique.

Dans l'ensemble du présent texte, les groupes d'éléments chimiques sont décrits selon la nouvelle classification IUPAC. Par exemple, les groupes 9 ou 10 correspondent aux métaux des colonnes 9 et 10 selon la classification IUPAC ou aux deux dernières colonnes du groupe VIIIB selon la classification CAS (CRC Handbook of Chemistry and Physics, CRC editor press, éditeur en chef D.R. Lide, 81e édition, 2000-2001). De manière similaire, le groupe 6 correspond aux métaux de la colonne 6 selon la classification IUPAC ou aux métaux des colonnes VIB selon la classification CAS.

Dans l'ensemble du présent texte, la « Moyenne pondérée de température du lit » (« Weighted Average Bed Temperature" ou « WABT » selon la terminologie anglo-saxonne) est la température moyenne sur la hauteur totale du lit. La « moyenne pondérée de température de lit», « début de cycle » ou « WABT SOR » correspond à la WABT au début du cycle de charge de catalyseur et la «moyenne pondérée de Température de lit », « fin de cycle » ou « WABT EOR » à la température à la fin du cycle de charge de catalyseur.

### Charges :

Des charges de naphta typiques utilisées dans la présente invention peuvent être un naphta issu de la distillation atmosphérique de brut « straight-run naphtha ») et/ou un naphta d'une unité de craquage thermique, et\ou un naphta d'une unité de craquage catalytique, et/ou un naphta d'une unité d'hydroconversion, et/ou un naphta d'une unité d'hydrotraitement, ou d'une unité de conversion de biomasse ou un naphta d'une unité d'oligomérisation, seul ou sous la forme d'un mélange.

Typiquement, le naphta utilisé dans la présente invention contient 10 à 50 000 ppm en poids de soufre, compris sous la forme d'un ou plusieurs composés soufrés, en particulier sous la forme de mercaptans tels que le butylmercaptan, de thiophènes, d'alkylthiophènes, comme le 2,5-diméthylthiophène, et des sulfures, tels que le sulfure d'éthylméthyle. Le naphta peut contenir en outre des oléfines et d'autres composés insaturés, ainsi que d'autres composés d'hétéroatomes, tels que l'azote et l'oxygène. De plus, le naphta peut contenir en outre des traces de métaux (As, Pb). Avantageusement, la charge de naphta utilisée dans la présente invention peut contenir des naphtas « straight-run naphthas »», qui contiennent typiquement entre 10 ppm et 5 000 ppm en poids de soufre.

Avantageusement, la charge de naphta utilisée dans la présente invention peut être au moins partiellement ou en totalité des charges de naphta d'unité de cokéfaction contenant un taux élevé de soufre (typiquement de 1 000 à 50 000 ppm en poids), un taux élevé d'azote (typiquement de 20 à 200 ppm en poids), un taux élevé d'aromatiques (typiquement de 15 à 25 % en volume), un taux élevé de composés insaturés (typiquement de 30 à 60 % en volume) et d'autres impuretés telles que le silicium qui est un poison pour les catalyseurs d'hydrotraitement (typiquement de 1 à 15 ppm en poids) et l'arsenic. Les unités de cokéfaction, telles que des unités de cokéfaction retardée, sont utilisées dans des raffineries pour craquer les résidus lourds, comme, par exemple, du gazole sous vide («Vacuum Gasoil» selon la terminologie anglo-saxonne) et/ou du résidu sous vide («Vacuum Residuum» selon la terminologie anglo-saxonne) de distillation sous vide, en distillats plus légers (naphta, diesel, gazole) et produire simultanément du coke de pétrole («petroleum coke» selon la terminologie anglo-saxonne). Le silicium et l'arsenic proviennent typiquement du brut lui-même ou de l'antimousse utilisé qui se décompose dans l'unité de cokéfaction. Les composés de silicium et d'arsenic sont des poisons pour les catalyseurs d'hydrotraitement utilisés dans les hydrotraitements de naphta ainsi que pour les catalyseurs utilisés dans les unités opérant en aval d'un hydrotraitement de naphta. L'élimination du silicium et de l'arsenic du naphta est nécessaire pour protéger les unités en aval. Par conséquent, les charges de naphta d'unité de cokéfaction nécessitent des conditions de fonctionnement particulièrement sévères pour satisfaire aux spécifications sévères des charges des unités en aval. Les trois étapes de la présente invention permettent de satisfaire ces spécifications particulièrement sévères et de traiter jusqu'à 100 % de naphta d'unité de cokéfaction avec de meilleures performances que les procédés de l'art antérieur.

Avantageusement, la charge de naphta pour utilisation dans la présente invention peut être au moins partiellement ou en totalité un naphta provenant d'une unité de valorisation de résidus lourds telle qu'un hydrocraqueur à lit bouillant ou un une unité de viscoréduction. Ces naphtas peuvent être aussi difficiles à hydrotraiter que les naphtas d'unité de cokéfaction. Les trois étapes de la présente invention permettent de manière similaire aux charges naphta d'unité de cokéfaction de satisfaire ces spécifications particulièrement sévères et de traiter ces charges avec de meilleures performances que les procédés de l'art antérieur.

### Hydrotraitement

Le procédé d'hydrotraitement est typiquement utilisé dans une raffinerie pour éliminer les composants qui sont des impuretés pour les procédés ou les produits en aval. Les principales réactions dans l'hydrotraitement de naphta sont l'hydrodésulfuration, l'hydrodénitrification et l'hydrogénation pour produire un naphta hydrotraité, une faible quantité de gaz combustible et éventuellement, une coupe légère de Gaz de Pétrole Liquéfié (GPL). La charge, de préférence en phase vapeur, est mise en contact avec un catalyseur d'hydrotraitement en présence d'hydrogène dans au moins un réacteur d'hydrotraitement.

Les réactions d'hydrotraitement convertissent des composés soufrés en sulfure d'hydrogène, éliminent les autres hétéroatomes, et hydrogènent les composés insaturés.

Les teneurs de soufre et d'azote du naphta hydrotraité sont typiquement comprises entre 0,1 et 1,0 ppm en poids de soufre, de préférence inférieures ou égales à 0,5 ppm en poids de soufre et comprises entre 0,1 et 1,0 ppm en poids d'azote, de préférence inférieures ou égales à 0,5 ppm en poids d'azote, suivant la destination du naphta hydrotraité ou de ses coupes.

Typiquement, une unité d'hydrotraitement de naphta comprend une section réactionnelle comprenant généralement un ballon de charge, un ou plusieurs trains d'échangeurs de chaleur charge/effluent, un four, au moins un réacteur fonctionnant avec un lit catalytique fixe et au moins un ballon séparateur.

Dans la présente invention, le lit catalytique fixe dans un réacteur d'hydrotraitement peut comprendre plusieurs couches additionnelles de catalyseur comme suit :
- au sommet du lit, une ou plusieurs couches optionnelles d'éléments poreux de plusieurs tailles, dédiées à la capture des impuretés solides présentes ou créées en début du lit ; ou, alternativement, une ou plusieurs couches de garnissages inertes («inert gradings» selon la terminologie anglo-saxonne) ayant des tailles décroissantes;
- une ou plusieurs couches de garnissages actifs avec une faible teneur de métaux imprégnés. Lesdits garnissages ont une fonction catalytique réduite, en particulier concernant l'hydrogénation de composés insaturés. Lesdits garnissages se distinguent des catalyseurs eux-mêmes par une activité d'hydrotraitement réduite et/ou une forme différente de celle du catalyseur (par exemple, des anneaux cannelés) et/ou une teneur en métal imprégné plus faible et/ou une surface spécifique inférieure et une couche beaucoup plus fine qu'une couche de catalyseur;
- le lit principal de catalyseur comprenant les trois couches de catalyseur d'hydrotraitement : une première couche de catalyseur, une deuxième couche de catalyseur et une troisième couche de catalyseur. Ces trois couches constituent la partie principale du lit catalytique fixe;
- à la base du lit, une ou plusieurs couches de composés inertes avant le dispositif de collecte de sortie pour empêcher le catalyseur de migrer hors du réacteur.

Typiquement, dans la présente invention, la première étape en présence du premier catalyseur est utilisée pour capturer et traiter les impuretés principales de la charge, telles que l'arsenic, le silicium, en particulier dans le cas d'une charge hautement contaminée ainsi que pour démarrer l'hydrogénation de composés insaturés éventuellement présents dans la charge. La deuxième étape en présence du deuxième catalyseur est utilisée pour hydrodésulfurer et hydrotraiter la charge. La troisième étape en présence de la troisième couche de catalyseur a pour but de finaliser la spécification de soufre et le piégeage du silicium et de l'arsenic.

Dans la présente invention, les étapes du procédé d'hydrotraitement sont conduites successivement en présence des premier, deuxième et troisième catalyseurs sur le lit principal de catalyseur. Le lit principal de catalyseur ne comprend aucune des couches d'éléments poreux et/ou des composés inertes et/ou des garnissages actives situées en amont ou en aval du lit principal et mentionnées ci-dessus.

Des moyens de réduction de température du lit catalytique, par exemple des fluides de refroidissement («quench» selon la terminologie anglo-saxonne) liquides ou gazeux, peuvent être éventuellement disposés dans le procédé et/ou dans le réacteur pour réguler la température opératoire à l'entrée de chaque couche de catalyseur, ou à l'intérieur d'une couche de catalyseur si cela est nécessaire, de façon à réguler la température opératoire pendant l'étape d'hydrotraitement. Avant le réacteur ou le procédé d'hydrotraitement, un réacteur ou une étape d'élimination des diènes peut être utilisé pour diminuer la teneur en dioléfines de la charge de 50 % au minimum, de préférence au minimum de 80%, et plus préférablement au minimum de 90%. L'élimination des diènes est conduite de façon conventionnelle dans un réacteur dédié à une température relativement basse.

L'hydrotraitement de naphta selon l'invention opère typiquement à une température comprise entre 200°C et 400°C, de préférence entre 260 et 360°C, avec une pression opératoire comprise entre 0,5 MPa et 7 MPa, de préférence entre 1,5 MPa et 6 MPa. La vitesse spatiale horaire liquide (définie comme le volume standard de charge liquide par heure par volume de catalyseur) est typiquement comprise entre 0,5 et 15 heures⁻¹, de préférence entre 1 et 8 heures⁻¹. La quantité d'hydrogène recyclé par rapport à la charge de naphta est généralement comprise entre 50 et 1 000 Nm³/m³.

Avantageusement, pour des charges de naphta « conventionnelles », la vitesse spatiale horaire liquide est de préférence comprise entre 3 et 10 heures⁻¹, de préférence entre 3 et 8 heures⁻¹.

Avantageusement, pour des charges de naphta « non conventionnelles », la vitesse spatiale horaire liquide est de préférence comprise entre 0,5 et 8 heures⁻¹.

### Propriétés du catalyseur :

Avantageusement, le catalyseur d'hydrotraitement comporte un support choisi parmi l'alumine, la silice, la silice-alumine ou des oxydes de titane ou de magnésium utilisés seuls ou en mélange. De préférence, le catalyseur d'hydrotraitement comporte un support d'alumine.

Dans le procédé selon l'invention, le deuxième catalyseur est choisi parmi les catalyseurs avec une phase active comprenant au moins un métal choisi parmi des éléments des groupes 9 ou 10 et au moins un métal choisi parmi les éléments du groupe 6.

Dans un premier mode de réalisation de l'invention, le premier catalyseur est de préférence choisi parmi les catalyseurs comprenant une phase active avec au moins un métal du groupe 6 et de préférence, au moins un métal du groupe 9 ou 10.

Dans un deuxième mode de réalisation de l'invention, le premier catalyseur ne contient aucune phase active. Dans ce cas, le premier catalyseur est constitué d'un support de préférence choisi parmi l'alumine ou la silice-alumine.

Le troisième catalyseur est, de préférence, choisi parmi les catalyseurs avec une phase active comprenant au moins un métal du groupe 6 et optionnellement, au moins un métal du groupe 9 ou 10.

Suivant la nature de la charge et la spécification du produit à atteindre, le premier et le troisième catalyseur peuvent être le même catalyseur ou ils peuvent être des catalyseurs différents.

L'au moins un métal du groupe 6 peut être, par exemple, le molybdène ou le tungstène. L'au moins un métal du groupe 9 ou 10 peut être, par exemple, le nickel ou le cobalt.

Avantageusement, les catalyseurs utilisés pour les premier et troisième catalyseurs sont des catalyseurs avec du molybdène uniquement, ou du nickel et du molybdène ou du cobalt et du molybdène ou du nickel et du cobalt et du molybdène.

Avantageusement, les catalyseurs utilisés pour le deuxième catalyseur sont des catalyseurs avec du nickel et du molybdène ou du cobalt et du molybdène ou du nickel et du cobalt et du molybdène.

Avantageusement, des catalyseurs avec 0,5 à 10 % en poids de nickel (exprimé en oxyde de nickel, NiO) et/ou avec 1 à 30 % en poids de molybdène, de préférence de 5 à 20 % en poids de molybdène (exprimé en oxyde de molybdène, MoO3) peuvent être utilisés pour les premier, deuxième et troisième catalyseurs. La teneur totale en oxydes de métaux des groupes 6 et/ou 9 et/ou 10 dans chacun des catalyseurs est généralement supérieure ou égale à 5 % en poids, de préférence supérieure ou égale à 7 % en poids et/ou inférieure ou égale à 40 % en poids, de préférence inférieure ou égale à 30 % en poids.

Avantageusement, les catalyseurs peuvent contenir en outre un élément promoteur tel que le phosphore et\ou le bore. Ces éléments peuvent être introduits dans la matrice ou plutôt imprégnés sur le support. Du silicium peut également être placé sur le support, seul ou en association avec du phosphore et\ou du bore. La concentration dudit élément promoteur est généralement inférieure à 20 % en poids et la plupart du temps inférieure à 10 %.

Avantageusement, le catalyseur, en particulier les deuxième et/ou troisième catalyseurs, peut contenir en outre un additif adjuvant conduisant à une meilleure dispersion et promotion de la phase active du catalyseur, de façon à améliorer son activité. Ledit additif adjuvant est typiquement un composé organique contenant de l'oxygène et/ou de l'azote, choisi parmi un acide carboxylique, un alcool, un aldéhyde ou un ester. Un catalyseur contenant un additif adjuvant est typiquement préparé par un procédé comprenant une étape d'imprégnation d'un support par les sels de métaux, dans des plages telles que celles décrites pour le catalyseur sans additif adjuvant, conduisant à un précurseur de catalyseur. Ensuite, le précurseur de catalyseur subit une étape d'imprégnation de l'additif adjuvant, suivie par une étape de séchage à une température inférieure à 200 °C, sans calcination consécutive de celui-ci. En conséquence, le catalyseur contenant un additif adjuvant est composé d'un support, optionnellement d'un élément promoteur, d'une phase active et d'un composé organique contenant de l'oxygène ou de l'azote. Pendant le procédé de préparation, un catalyseur contenant un additif adjuvant ne subit pas de calcination, c'est-à-dire que sa phase active comprend des métaux, par exemple des métaux des groupes 6 et/ou du groupe 9 ou 10, qui n'ont pas été transformés sous la forme d'oxyde.

Dans le présent texte, toutes les teneurs en métaux sont exprimées sous forme d'oxyde. Pour évaluer la teneur en métal exprimée sous forme d'oxyde d'un catalyseur contenant un additif adjuvant, son précurseur de catalyseur correspondant doit être calciné, ce qui conduit à une forme métallique d'oxydes de métaux qui sont comparables à celle du catalyseur sans additif. Lorsque le catalyseur contenant un additif adjuvant est mis en opération et chauffé, l'additif adjuvant est éliminé du catalyseur. L'homme du métier évalue donc la quantité d'additif adjuvant en utilisant la perte au feu (« loss on ignition » selon la terminologie anglo-saxonne) du catalyseur.

En conséquence, dans le présent texte, lorsqu'un catalyseur contient un additif adjuvant, la masse volumique chargée dudit catalyseur dans une couche de catalyseur donnée d'une section réactionnelle correspond à la masse dudit catalyseur dans ladite couche moins sa perte au feu exprimée en masse divisée par le volume de ladite couche.

Les catalyseurs sont typiquement utilisés dans un procédé d'hydrotraitement sous une forme sulfurée obtenue après traitement à haute température au contact d'un composé organique soufré décomposable en H₂S ou directement en contact avec un flux gazeux de H₂S dilué dans de l'hydrogène. Cette étape peut être conduite in situ ou ex situ de la section de réaction d'hydrotraitement (à l'intérieur ou à l'extérieur du réacteur) à des températures comprises entre 180 et 600 °C et plus préférablement entre 200 et 400 °C.

Avantageusement, la masse volumique chargée des premier, deuxième et troisième catalyseurs est supérieure ou égale à 400 kg/m³, de préférence supérieure ou égale à 450 kg/m³ et de préférence, inférieure ou égale à 900 kg/m³, plus préférablement inférieure ou égale à 850 kg/m³. Avantageusement, la surface spécifique des premier et troisième catalyseurs est supérieure ou égale à 240 m²/g, de préférence supérieure ou égale à 270 m²/g et de préférence, inférieure ou égale à 380 m²/g, plus préférablement inférieure ou égale à 350 m²/g.

Avantageusement, la surface spécifique du deuxième catalyseur est supérieure ou égale à 120 m²/g, de préférence supérieure ou égale à 130 m²/g et inférieure ou égale à 260 m²/g, de préférence inférieure ou égale à 250 m²/g.

Avantageusement, la teneur totale en métaux du troisième catalyseur est comprise entre 0,7 et 1,25 fois, de préférence entre 0,8 et 1,2 fois la teneur totale en métaux du premier catalyseur.

Avantageusement, les premier, deuxième et troisième catalyseurs peuvent présenter un volume poreux total mesuré par porosité au mercure supérieur ou égal à 0,3 cm³/g, de préférence supérieur ou égal à 0,4, plus préférablement supérieur ou égal à 0,5 et inférieure ou égale à 1,3 cm³/g.

Avantageusement, les premier, deuxième et troisième catalyseurs peuvent présenter un volume poreux total mesuré par porosité au mercure inférieur ou égal à 1,4 cm³/g, de préférence inférieur ou égal à 1,3 cm³/g. Le volume poreux total mesuré par porosité au mercure est déterminé selon la norme ASTM D4284-92 en, considérant un angle de mouillage de 140° avec un dispositif équivalent à l'Autopore III commercialisé par Micromeritics.

L'homme du métier sait que les propriétés de chacun des catalyseurs peuvent fluctuer légèrement sur l'épaisseur de chaque couche à condition que les propriétés de la couche de catalyseur soient globalement équivalentes aux caractéristiques du catalyseur en termes de masse volumique chargée, teneur en métal et surface spécifique.

Les première, deuxième et troisième couches de catalyseur peuvent comprendre des catalyseurs partiellement régénérés.

### Liste des figures

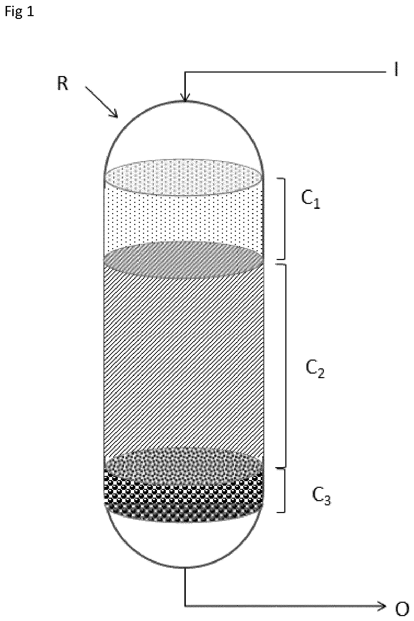

La figure 1 représente un mode de réalisation d'un réacteur d'hydrotraitement R qui peut être utilisé dans l'unité et/ou le procédé selon l'invention.

### Description des modes de réalisation

Comme représenté à la figure, le réacteur d'hydrotraitement R a été chargé en utilisant un dispositif de chargement dense avec trois couches de catalyseur : une première couche de premier catalyseur C₁, une deuxième couche de deuxième catalyseur C₂ et une troisième couche de troisième catalyseur C₃. Les couches de garnissage inerte ou actif en amont ou en aval des couches de catalyseur ne sont pas représentées. Le réacteur d'hydrotraitement R est opéré en flux descendant avec une charge de naphta alimentée par une conduite d'entrée I au sommet du réacteur et collectée à la sortie du réacteur par une conduite de sortie O.

### Exemples :

Des catalyseurs d'hydrotraitement de naphta supportés sur alumine ayant les propriétés suivantes sont utilisés dans les exemples. Tous les catalyseurs sont chargés sans aucun contrôle de leur distribution (chargés au manchon, « soack loaded » selon la terminologie anglo-saxonne).

**Le tableau 1 ci-dessous indique les propriétés des catalyseurs d'hydrotraitement utilisés.**

| Nom | Type | Surface spécifique en masse (m²/g) | Teneur en Ni (% en poids) | Teneur en Mo (% en poids) | Surface spécifique chargée (10⁶m²/m³) |
|---|---|---|---|---|---|
| A | Calciné | 175 | 4,0 | 15,5 | 128 |
| B | Calciné | 280 | 2,4 | 9,5 | 176 |
| C | Calciné | 230 | 1,8 | 6,9 | 113 |
| D | Calciné | 320 | 0,9 | 3,5 | 176 |
| E | Avec additif adjuvant | 155 | 4,2 | 18,0 | 127 |
| F | Calciné | 248 | 8,2 | 7,0 | 154 |
| G | Calciné | 320 | 0 | 3,5 | 176 |
| H | Calciné | 290 | 0 | 0 | 206 |
| K | Calciné | 180 | 3,2 | 13,5 | 122 |
| L | Avec additif adjuvant | 165 | 2,4 | 9,5 | 132 |

Pour tous les exemples, les spécifications du naphta hydrotraité visées sont de 0,5 ppm poids en soufre et 0,5 ppm poids en azote.

### Exemple 1 :

Une charge de Coker naphta d'unité de cokéfaction retardée est traitée dans un premier temps afin d'hydrogéner toutes ses dioléfines et ensuite envoyée à l'unité d'hydrotraitement de naphta. La charge requiert des conditions d'hydrotraitement sévères en raison de sa composition ainsi que de la nature et du type de ses impuretés.

**Le tableau 2 ci-dessous indique les propriétés de la charge 1**

| | Charge de Coker naphta |
|---|---|
| Masse volumique, kg/m³ | 750 |
| Teneur en soufre, % en poids | 1,0 |
| Teneur en azote, ppm en poids | 150 |
| Indice de brome, g/100 g | 75 |
| Valeur d'anhydride maléique, mg d'anhydride maléique/g | 4 |
| Teneur en silicium, ppm en poids | 4 |

L'hydrotraitement de naphta de la charge 1 ayant les propriétés décrites dans le tableau 2 (en aval de l'élimination de dioléfines) est simulé en considérant plusieurs configurations de lit catalytique dans un réacteur d'hydrotraitement dans les conditions décrites dans le tableau 3, qui indique les propriétés des configurations de lit catalytique :

**Tableau 3**

| | Charge de catalyseur 1 (com paratif) | | Charge de catalyseur 2 (invention) | | Charge de catalyseur 3 (com paratif) | | Charge de catalyseur 4 (invention) | |
|---|---|---|---|---|---|---|---|---|
| | Catalyseur | Volume (% en volume) | Catalyseur | Volume (% en volume) | Catalyseur | Volume (% en volume) | Catalyseur | Volume |
| Lit 1 | B | 50% | B | 50% | K | 50% | B | 50% |
| Lit 2 | A | 50% | A | 40% | A | 40% | A | 40% |
| Lit 3 | | | D | 10% | D | 10% | G | 10% |
| LSHV (h⁻¹) | 2,0 | | 2,0 | | 2,0 | | 2,0 | |
| Pression partielle d'hydrogène (MPa) | 4,0 | | 4,0 | | 4,0 | | 4,0 | |
| L₁/L₂ | 1,38 | | 1,38 | | 0,95 | | 1,38 | |
| L₃/L₂ | 1,00 | | 1,38 | | 1,38 | | 1,38 | |

Les résultats de simulation suivants sont obtenus comme indiqué dans le tableau 4 ci-dessous :

**Tableau 4**

| | Chargement de catalyseur 1 (comparatif) | Chargement de catalyseur 2 (invention) | Chargement de catalyseur 3 (com paratif) | Chargement de catalyseur 4 (invention) |
|---|---|---|---|---|
| WABT, début de cycle (°C) | 280 | 280 | 280 | 280 |
| WABT, fin de cycle (°C) | 310 | 330 | 330 | 325 |
| Durée de vie de la charge de catalyseur, % du cas de base | Base | Base | Base | Base |
| | | + 34 % | -20 % | + 20 % |
| Silicium capturé, kg | 4 106 | 4 194 | 3 536 | 4 194 |

Comme le montre le tableau 4, lorsque les trois catalyseurs utilisés pour la réaction d'hydrotraitement de naphta sont chargés selon l'invention, comme dans les chargements de catalyseur 2 et 4, la durée de vie de la charge de catalyseur est augmentée de 34 % et 20 % respectivement, par rapport à la charge comparative avec seulement deux couches (charge de catalyseur 1).

Comme le montre le tableau 4, non seulement les chargements de catalyseur 2 et 4 selon l'invention permettent d'utiliser la charge de catalyseur plus longtemps que la charge comparative avec seulement deux couches, mais également, le catalyseur peut fonctionner à une température WABT plus élevée, tout en maintenant ses performances. En effet, la WABT fin de cycle est augmentée de 20 °C pour le chargement 2 et de 15 °C pour le chargement 4 par rapport au chargement 1.

Le silicium capturé pendant la durée de vie de la charge de catalyseur est augmenté de 88 kilogrammes pour les chargements 2 et 4 par rapport au chargement comparatif 1 avec seulement deux couches. Par conséquent, la capacité de capture de silicium des chargements de catalyseur selon l'invention est augmentée de façon à éviter que le silicium perce à la fin du cycle.

Le chargement comparatif 3 correspond à un chargement dans lequel les critères de teneur en métal des premier, deuxième et troisième catalyseurs sont satisfaits, mais le rapport des surfaces spécifiques chargées L₁/L₂ est inférieur à 1,20. Les résultats indiquent une diminution de la durée de vie de la charge de catalyseur de 20 %. De plus, la capacité de capture de silicium est réduite à 3 536 kg/h au lieu de 4 194 kg/h pour le chargement selon l'invention.

### Exemple 2 :

Une charge de naphta conventionnelle constituée d'un mélange de naphta straight-run et de coker naphta est envoyée à une unité d'hydrotraitement de naphta. La charge ne requiert pas des conditions d'hydrotraitement sévères en raison de sa composition ainsi que de la nature et du type de ses impuretés.

**Le tableau 5 ci-dessous indique les propriétés de la charge 2.**

| | Charge de naphta 2 |
|---|---|
| Masse volumique, kg/m³ | 750 |
| Teneur en soufre, % en poids | 0,1 |
| Teneur en azote, ppm en poids | 10 |
| Indice de brome, g/100 g | 8 |
| Valeur d'anhydride, mg d'anhydride maléique/g | 2,5 |
| Teneur en silicium, ppm en poids | 0,4 |

L'hydrotraitement de naphta de la charge 2 ayant les propriétés décrites dans le tableau 5 est simulé en considérant plusieurs configurations de lit catalytique dans un réacteur d'hydrotraitement opérant dans les conditions suivantes: Le tableau 6 ci-dessous décrit les propriétés des quatre configurations de lit catalytique.

| | Chargement de catalyseur 5 (comparatif) | | Chargement de catalyseur 6 (invention) | | Chargement de catalyseur 7 (invention) | | Chargement de catalyseur 8 (invention) | |
|---|---|---|---|---|---|---|---|---|
| | Catalyse ur | Volume (% en volume) | Catalys eur | Volume (% en volume) | Catalyse ur | Volume (% en volume) | Catalyseu r | Volume (% en volume) |
| Lit 1 | D | 20 | D | 20 | G | 20 | H | 20 |
| Lit 2 | C | 75 | C | 75 | C | 75 | C | 75 |
| Lit 3 | C | 5 | D | 5 | D | 5 | D | 5 |
| LHSV (h⁻¹) | 10 | | 10 | | 10 | | 10 | |
| Pression partielle d'hydrogène (MPa) | 1,0 | | 1,0 | | 1,0 | | 1,0 | |
| L₁/L₂ | 1,56 | | 1,56 | | 1,56 | | 1,82 | |
| L₃/L₂ | 1,00 | | 1,56 | | 1,56 | | 1,56 | |

Les résultats de simulation sont obtenus selon le tableau 7 ci-dessous :

| | Charge de catalyseur 5 (comparatif) | Charge de catalyseur 6 (invention) | Charge de catalyseur 7 (invention) | Charge de catalyseur 8 (invention) |
|---|---|---|---|---|
| WABT, début de cycle (°C) | 270 | 270 | 275 | 285 |
| WABT, fin de cycle (°C) | 320 | 335 | 335 | 335 |
| Durée de vie de la charge de catalyseur, % du cas de base | Base | Base +30% | Base +20 % | Base +6 % |
| Silicium capturé, kg | 472 | 490 | 490 | 580 |

Comme le montre le tableau 7, lorsque les trois catalyseurs utilisés pour la réaction d'hydrotraitement de naphta sont chargés selon l'invention, comme dans les chargements de catalyseur 6, 7 et 8, la durée de vie de la charge de catalyseur est augmentée par rapport au chargement comparative avec seulement deux couches (chargement 5) respectivement de 30 %, 20 % et 6 %.

Comme le montre le tableau 7, non seulement le chargement de catalyseur selon l'invention permet d'utiliser la charge de catalyseur plus longtemps que le chargement comparatif avec seulement deux couches, mais également, le catalyseur peut fonctionner à une température WABT plus élevée, tout en maintenant ses performances. En effet, la WABT fin de cycle est augmentée de 15 °C pour les chargements 6, 7 et 8 par rapport au chargement 5.

De plus, le silicium capturé pendant la durée de vie de la charge de catalyseur est augmenté de 18 kilogrammes par rapport au chargement comparatif 5 pour les chargements 6 et 7, et de 108 kg pour le chargement 8. Par conséquent, la capacité de capture de silicium des charges de catalyseur selon l'invention est augmentée de façon à éviter que le silicium ne perce à la fin du cycle.

Le procédé selon l'invention est toujours intéressant même quand charge à traiter ne requiert pas des conditions d'hydrotraitement sévères.

### Exemple 3 :

Une charge de Coker naphta d'une unité de cokéfaction retardée ayant un taux élevé d'arsenic est traitée dans un premier temps afin d'hydrogéner toutes ses dioléfines et ensuite envoyée à l'unité d'hydrotraitement de naphta. La charge nécessite des conditions d'hydrotraitement sévères pour traiter la contamination simultanée par l'arsenic et le silicium.

**Le tableau 8 ci-dessous indique les propriétés de la charge 3.**

| | Charge de coker naphta 3 |
|---|---|
| Masse volumique, kg/m³ | 750 |
| Teneur en soufre, % en poids | 1,0 |
| Teneur en azote, ppm en poids | 150 |
| Indice de brome, g/100 g | 75 |
| Valeur d'anhydride maléique, mg d'anhydride maléique/g | 4 |
| Teneur en silicium, ppm en poids | 3 |
| Teneur en arsenic, ppm en poids | 40 |

L'hydrotraitement de naphta de la charge 3 ayant les propriétés décrites dans le tableau 8 (mais en aval de l'élimination des dioléfines) est simulé en considérant plusieurs configurations de lit catalytique dans un réacteur d'hydrotraitement compris dans la section de réaction d'une unité d'hydrotraitement.

**Le tableau 9 ci-dessous indique les propriétés des trois configurations de lit catalytique.**

| | Chargement de catalyseur 9 (comparatif) | | Chargement de catalyseur 10 (invention) | | Chargement de catalyseur 11 (comparatif) | |
|---|---|---|---|---|---|---|
| | Catalyseur | Volume (% en volume) | Catalyseur | Volume (% en volume) | Catalyseur | Volume (% en volume) |
| Lit 1 | F | 20% | F | 20% | F | 20% |
| Lit 2 | E | 65% | E | 65% | E | 65% |
| Lit 3 | E | 15% | B | 15% | L | 15% |
| LHSV (h⁻¹) | 2,0 | | 2,0 | | 2,0 | |
| Pression partielle d'hydrogène (MPa) | 4,0 | | 4,0 | | 4,0 | |
| L₁/L₂ | 1,21 | | 1,21 | | 1,21 | |
| L₃/L₂ | 1,00 | | 1,21 | | 1,04 | |

Les résultats de simulation obtenus sont indiqués au tableau 10 ci-dessous :

| | Chargement de catalyseur 9 (com paratif) | Chargement de catalyseur 10 (invention) | Chargement de catalyseur 11 (com paratif) |
|---|---|---|---|
| WABT, début de cycle (°C) | 285 | 285 | 285 |
| WABT, fin de cycle (°C) | 310 | 330 | 325 |
| Durée de vie de la charge de catalyseur, % du cas de base | Base | Base +1,3% | Base |
| | | | - 0,3% |
| Silicium capturé, kg | 2 778 | 2 815 | 2 769 |
| Arsenic capturé, kg | 34,7 | 35,2 | 34,6 |

Comme le montre le tableau 10, lorsque les trois catalyseurs utilisés pour la réaction d'hydrotraitement de naphta sont chargés selon l'invention, comme dans le chargement de catalyseur 10, la durée de vie de la charge de catalyseur est augmentée de 1,3 % par rapport au chargement comparatif (chargement de catalyseur 9 dans laquelle les deuxième et troisième couches sont constituées des mêmes catalyseurs).

Comme le montre le tableau 10, non seulement le chargement de catalyseur 10 selon l'invention permet d'opérer la charge de catalyseur plus longtemps que le chargement comparatif 9, mais également, le catalyseur peut fonctionner à une température WABT plus élevée, tout en maintenant ses performances. En fait, la WABT fin de cycle est augmentée de 20 °C pour le chargement 10 par rapport au chargement 9.

Le silicium capturé pendant la durée de vie de la charge de catalyseur est augmenté de 37 kilogrammes pour le chargement de catalyseur 10 par rapport au chargement comparatif 9. La capacité de capture de silicium des chargements de catalyseur selon l'invention est augmentée de façon à éviter que le silicium ne perce à la fin du cycle.

L'arsenic capturé pendant la durée de vie de la charge de catalyseur est légèrement amélioré par rapport à la charge comparative 9.

Le chargement comparatif 11 correspond à un chargement dans lequel les critères de teneur en métal des premier, deuxième et troisième catalyseurs sont satisfaits, mais le rapport des surfaces spécifiques chargées L₃/L₂ est inférieur à 1,20. Les résultats montrent une faible diminution de la durée de vie de la charge de catalyseur (0,3 %) et une diminution relative de la capacité de capture de silicium (-9 kg/h par rapport à la charge comparative 9). Dans la charge comparative 11, la quantité de silicium capturée est même un peu inférieure à la quantité capturée par le chargement comparatif 9 avec seulement deux couches.

## Revendications

1. Procédé d'hydrotraitement d'un naphta, utilisant au moins trois catalyseurs, chacun desdits catalyseurs étant **caractérisé par** sa « surface spécifique chargée », désignée par L₁, L₂ et L₃ respectivement, correspondant à sa surface spécifique en masse multipliée par sa masse volumique chargée,
ledit procédé comprenant trois étapes successives :
- une première étape a) en présence du premier catalyseur, ledit premier catalyseur comprenant un support et optionnellement, une phase active, ladite phase active contenant au moins un métal du groupe 6 et de préférence, au moins un métal du groupe 9 ou 10 ;
- une deuxième étape b) en présence du deuxième catalyseur, ledit deuxième catalyseur comprenant un support et une phase active, ladite phase active contenant au moins un métal du groupe 9 ou 10 et au moins un métal du groupe 6 ;
- une troisième étape c) en présence du troisième catalyseur, ledit troisième catalyseur comprenant un support et une phase active, ladite phase active contenant au moins un métal du groupe 6 et optionnellement, au moins un métal du groupe 9 ou 10 ;
tel que :
- la teneur en métal du groupe 6 du troisième catalyseur est inférieure à la teneur en métal du groupe 6 dudit deuxième catalyseur ;
- le rapport L₁/L₂ de la « surface spécifique chargée » dudit premier catalyseur sur la « surface spécifique chargée » dudit deuxième catalyseur est supérieur ou égal à 1,20, de préférence supérieur ou égal à 1,35 ;
- le rapport L₃/L₂ de la « surface spécifique chargée » dudit troisième catalyseur sur la « surface spécifique chargée » dudit deuxième catalyseur est supérieur à 1,07, préférentiellement supérieur ou égal à 1,20, plus préférentiellement supérieur ou égal à 1,35.

2. Procédé selon la revendication 1, dans lequel ledit premier catalyseur comprend une phase active, ladite phase active contenant au moins un métal du groupe 6 et de préférence, au moins un métal du groupe 9 ou 10, de sorte que :
- la teneur en métal du groupe 6 dudit premier catalyseur est inférieure à la teneur en métal du groupe 6 dudit deuxième catalyseur.

3. Procédé selon la revendication 2, dans lequel la phase active du premier catalyseur contient au moins un métal du groupe 9 ou 10, de sorte que :
- la teneur en métal du groupe 9 ou 10 de ladite phase active du premier catalyseur est supérieure ou égale à 0,5 % en poids et inférieure à 3 % en poids ;
- la teneur en métal du groupe 9 plus 10 de ladite phase active du premier catalyseur est inférieure à la teneur en métal du groupe 9 plus 10 dudit deuxième catalyseur ;
- la teneur en métal du groupe 6 dudit premier catalyseur est, de préférence, supérieure ou égale à 0,5 % en poids et/ou, de préférence, inférieure ou égale à 6 % en poids.

4. Procédé selon la revendication 2, dans lequel la phase active du premier catalyseur contient au moins un métal du groupe 9 ou 10 de sorte que :
- la teneur en métal du groupe 9 ou 10 dudit premier catalyseur est supérieure ou égale à 3 % en poids et inférieure ou égale à 9 % en poids ;
- la teneur en métal du groupe 9 plus 10 du premier catalyseur est supérieure à la teneur en métal du groupe 9 plus 10 dudit deuxième catalyseur ;
- la teneur en métal du groupe 6 dudit premier catalyseur est, de préférence, supérieure à 6 % en poids, plus préférablement supérieure ou égale à 7,5 % en poids et/ou, de préférence, inférieure ou égale à 10 % en poids, plus préférablement inférieure ou égale à 9,5 % en poids.

5. Procédé selon la revendication 1, dans lequel ledit premier catalyseur est constitué d'un support sans phase active.

6. Procédé selon l'une des revendications précédentes, dans lequel la phase active du troisième catalyseur contient au moins un métal du groupe 9 ou 10, de sorte que :
- la teneur en métal du groupe 9 plus 10 du troisième catalyseur est inférieure à la teneur en métal du groupe 9 plus 10 du deuxième catalyseur.

7. Procédé selon l'une des revendications précédentes, dans lequel la vitesse spatiale horaire du liquide de la première étape est inférieure ou égale à 20 fois la vitesse spatiale horaire du liquide globale, de préférence inférieure ou égale à 10 fois et/ou supérieure ou égale à 1,33 fois la vitesse spatiale horaire du liquide globale, de préférence supérieure ou égale à 1,6 fois ladite vitesse.

8. Procédé selon l'une des revendications précédentes, dans lequel la vitesse spatiale horaire du liquide de la deuxième étape est inférieure ou égale à 4 fois la vitesse spatiale horaire du liquide globale, de préférence inférieure ou égale à 2,5 fois et/ou supérieure ou égale à 1,33 fois la vitesse spatiale horaire du liquide globale.

9. Procédé selon l'une des revendications précédentes, la vitesse spatiale horaire du liquide dans la troisième étape est supérieure ou égale à 5 fois la vitesse spatiale horaire du liquide globale, de préférence supérieure ou égale à 6,66 fois et/ou inférieure ou égale à 20 fois et de préférence, inférieure ou égale à 14,29 fois la vitesse spatiale horaire du liquide globale.

10. Procédé selon l'une des revendications précédentes, dans lequel le premier et/ou le troisième catalyseur est choisi parmi un catalyseur contenant du molybdène uniquement, ou du nickel et du molybdène, ou du cobalt et du molybdène, ou du nickel et du cobalt et du molybdène.

11. Procédé selon l'une des revendications précédentes, dans lequel le deuxième catalyseur est choisi parmi un catalyseur contenant du nickel et du molybdène, ou du cobalt et du molybdène, ou du nickel et du cobalt et du molybdène.

12. Procédé selon l'une des revendications précédentes, dans lequel ledit naphta comprend des hydrocarbures comprenant de 10 à 50 000 ppm en poids d'un ou plusieurs composés soufrés.

13. Procédé selon l'une des revendications précédentes, dans lequel ledit naphta comprend une charge de naphta craqué, seule ou en mélange avec d'autres charges de naphta.

14. Procédé d'hydrotraitement d'un naphta, comprenant un procédé d'hydrotraitement selon l'une des revendications précédentes, produisant un naphta hydrodésulfuré,
ledit procédé comprenant les étapes préliminaires suivantes :
- une étape optionnelle d'hydrogénation de dioléfines produisant un naphta ayant une teneur réduite en dioléfines ;
- une ou plusieurs étapes optionnelles de séparation et/ou chauffage et/ou refroidissement ;
et les étapes supplémentaires suivantes :
- une étape de séparation d'au moins une partie du naphta hydrodésulfuré pour l'élimination de H₂S et la production optionnelle d'une coupe de GPL et/ou d'un flux incondensable ;
- une étape optionnelle de séparation du naphta hydrodésulfuré en au moins deux coupes de naphta.

15. Unité d'hydrotraitement de naphta comprenant une section réactionnelle contenant au moins trois catalyseurs, ledit catalyseur étant chargé sur des première, deuxième et troisième couches de catalyseur successives et chacun desdits catalyseurs étant **caractérisé par** sa « surface spécifique chargée » , désignée par L₁, L₂ et L₃ respectivement, correspondant à sa surface spécifique en masse multipliée par sa masse volumique chargée,
ladite charge de naphta étant mise en contact en présence d'hydrogène dans ladite section réactionnelle successivement avec :
- la première couche de catalyseur, ledit premier catalyseur comprenant un support et optionnellement, une phase active, ladite phase active contenant au moins un métal du groupe 6 et de préférence, au moins un métal du groupe 9 ou 10 ;
- la deuxième couche de catalyseur, ledit deuxième catalyseur comprenant un support et une phase active, ladite phase active contenant au moins un métal du groupe 9 ou 10 et au moins un métal du groupe 6 ;
- la troisième couche de catalyseur, ledit troisième catalyseur comprenant un support et une phase active, ladite phase active contenant au moins un métal du groupe 6 et de préférence, au moins un métal du groupe 9 ou 10 ;
tel que :
- la teneur en métal du groupe 6 du troisième catalyseur est inférieure à la teneur en métal du groupe 6 du deuxième catalyseur
- le rapport L₁/L₂ de la « surface spécifique chargée » de ladite première couche de catalyseur sur la « surface spécifique chargée » de ladite deuxième couche de catalyseur est supérieur ou égal à 1,20, de préférence supérieur ou égal à 1,35 ;
- le rapport L₃/L₂ de la « surface spécifique chargée » de ladite troisième couche de catalyseur sur la « surface spécifique chargée » de ladite deuxième couche de catalyseur est supérieur à 1,07, préférentiellement supérieur ou égal à 1,20, plus préférentiellement supérieur ou égal à 1,35.

16. Unité d'hydrotraitement de naphta selon la revendication 15, dans lequel les première, deuxième et troisième couches de catalyseur sont chargées dans au moins un réacteur opérant avec un lit catalytique fixe et en flux axial, notamment un réacteur unique.

## Patentansprüche

1. Verfahren zur Hydrobehandlung eines Naphtha, wobei mindestens drei Katalysatoren zur Anwendung kommen, wobei jeder dieser Katalysatoren durch seine "aufgebrachte spezifische Oberfläche" gekennzeichnet ist, welche mit L₁, L₂ beziehungsweise L₃ bezeichnet wird, wobei dies dem Produkt aus seiner massenbezogenen spezifischen Oberfläche und seiner aufgebrachten Dichte entspricht, wobei das Verfahren nacheinander drei Schritte umfasst:
- einen ersten Schritt a) in Gegenwart des ersten Katalysators, wobei der erste Katalysator einen Träger sowie, möglicherweise, eine aktive Phase umfasst, wobei die aktive Phase mindestens ein Metall der Gruppe 6 sowie, vorzugsweise, mindestens ein Metall der Gruppe 9 oder 10 enthält;
- einen zweiten Schritt b) in Gegenwart des zweiten Katalysators, wobei der zweite Katalysator einen Träger sowie eine aktive Phase umfasst, wobei die aktive Phase mindestens ein Metall der Gruppe 9 oder 10 sowie mindestens ein Metall der Gruppe 6 enthält;
- einen dritten Schritt c) in Gegenwart des dritten Katalysators, wobei der dritte Katalysator einen Träger sowie eine aktive Phase umfasst, wobei die aktive Phase mindestens ein Metall der Gruppe 6 sowie, möglicherweise, mindestens ein Metall der Gruppe 9 oder 10 enthält; derart, dass:
- der Gehalt an Metall der Gruppe 6 des dritten Katalysators niedriger als der Gehalt an Metall der Gruppe 6 des zweiten Katalysators ist;
- das Verhältnis L₁/L₂ zwischen der "aufgebrachten spezifischen Oberfläche" des ersten Katalysators und der "aufgebrachten spezifischen Oberfläche" des zweiten Katalysators mindestens 1,20, vorzugsweise mindestens 1,35 beträgt;
- das Verhältnis L₃/L₂ zwischen der "aufgebrachten spezifischen Oberfläche" des dritten Katalysators und der "aufgebrachten spezifischen Oberfläche" des zweiten Katalysators mindestens 1,07, vorzugsweise mindestens 1,20, stärker bevorzugt mindestens 1,35 beträgt.

2. Verfahren nach Anspruch 1, wobei der erste Katalysator eine aktive Phase umfasst, wobei die aktive Phase mindestens ein Metall der Gruppe 6 sowie, vorzugsweise, mindestens ein Metall der Gruppe 9 oder 10 umfasst, sodass:
- der Gehalt an Metall der Gruppe 6 des ersten Katalysators niedriger als der Gehalt an Metall der Gruppe 6 des zweiten Katalysators ist.

3. Verfahren nach Anspruch 2, wobei die aktive Phase des ersten Katalysators mindestens ein Metall der Gruppe 9 oder 10 umfasst, sodass:
- der Gehalt an Metall der Gruppe 9 oder 10 der aktiven Phase des ersten Katalysators mindestens 0,5 Gewichts-% und weniger als 3 Gewichts-% beträgt;
- der Gehalt an Metall der Gruppe 9 plus 10 der aktiven Phase des ersten Katalysators niedriger als der Gehalt an Metall der Gruppe 9 plus 10 des zweiten Katalysators ist.
- der Gehalt an Metall der Gruppe 6 des ersten Katalysators mindestens 0,5 Gewichts-% und/oder, vorzugsweise, höchstens 6 Gewichts-% beträgt;

4. Verfahren nach Anspruch 2, wobei die aktive Phase des ersten Katalysators mindestens ein Metall der Gruppe 9 oder 10 umfasst, sodass:
- der Gehalt an Metall der Gruppe 9 oder 10 des ersten Katalysators mindestens 3 Gewichts-% und höchstens 9 Gewichts-% beträgt;
- der Gehalt an Metall der Gruppe 9 plus 10 des ersten Katalysators höher als der Gehalt an Metall der Gruppe 9 plus 10 des zweiten Katalysators ist;
- der Gehalt an Metall der Gruppe 6 des ersten Katalysators vorzugsweise mehr als 6 Gewichts-%, stärker bevorzugt mindestens 7,5 Gewichts-% und/oder, vorzugsweise, höchstens 10 Gewichts-%, stärker bevorzugt höchstens 9,5 Gewichts-% beträgt.

5. Verfahren nach Anspruch 1, wobei der erste Katalysator aus einem Träger ohne aktive Phase besteht.

6. Verfahren nach einem der vorhergehenden Ansprüche, wobei die aktive Phase des dritten Katalysators mindestens ein Metall der Gruppe 9 oder 10 umfasst, sodass:
- der Gehalt an Metall der Gruppe 9 plus 10 des dritten Katalysators niedriger als der Gehalt an Metall der Gruppe 9 plus 10 des zweiten Katalysators ist.

7. Verfahren nach einem der vorhergehenden Ansprüche, wobei die stundenbezogene Raumgeschwindigkeit der Flüssigkeit des ersten Schrittes höchstens dem 20-fachen der stundenbezogenen Raumgeschwindigkeit der Flüssigkeit insgesamt, vorzugsweise höchstens dem 10-fachen und/oder mindestens dem 1,33-fachen der stundenbezogenen Raumgeschwindigkeit der Flüssigkeit insgesamt, vorzugsweise mindestens dem 1,6-fachen dieser Geschwindigkeit entspricht.

8. Verfahren nach einem der vorhergehenden Ansprüche, wobei die stundenbezogene Raumgeschwindigkeit der Flüssigkeit des zweiten Schrittes höchstens dem 4-fachen der stundenbezogenen Raumgeschwindigkeit der Flüssigkeit insgesamt, vorzugsweise höchstens dem 2,5-fachen und/oder mindestens dem 1,33-fachen der stundenbezogenen Raumgeschwindigkeit der Flüssigkeit insgesamt entspricht.

9. Verfahren nach einem der vorhergehenden Ansprüche, wobei die stundenbezogene Raumgeschwindigkeit der Flüssigkeit im dritten Schritt mindestens dem 5-fachen der stundenbezogenen Raumgeschwindigkeit der Flüssigkeit insgesamt, vorzugsweise mindestens dem 6,66-fachen und/oder höchstens dem 20-fachen und vorzugsweise höchstens dem 14,29-fachen der stundenbezogene Raumgeschwindigkeit der Flüssigkeit insgesamt entspricht.

10. Verfahren nach einem der vorhergehenden Ansprüche, wobei der erste und/oder der dritte Katalysator aus einem Katalysator ausgewählt sind, welcher ausschließlich Molybdän, oder Nickel und Molybdän, oder Kobalt und Molybdän, oder Nickel und Kobalt und Molybdän enthält.

11. Verfahren nach einem der vorhergehenden Ansprüche, wobei der zweite Katalysator aus einem Katalysator ausgewählt ist, welcher Nickel und Molybdän, oder Kobalt und Molybdän, oder Nickel und Kobalt und Molybdän enthält.

12. Verfahren nach einem der vorhergehenden Ansprüche, wobei das Naphtha Kohlenwasserstoffe umfasst, welche 10 bis 50.000 ppm nach Gewicht an einer oder mehreren Schwefelverbindungen umfassen.

13. Verfahren nach einem der vorhergehenden Ansprüche, wobei das Naphtha eine Charge aus gecracktem Naphtha umfasst, welche allein oder in Mischung mit weiteren Naphtha-Chargen vorliegt.

14. Verfahren zur Hydrobehandlung eines Naphtha, wobei es ein Hydrobehandlungsverfahren nach einem der vorhergehenden Ansprüche umfasst, wobei ein hydroentschwefeltes Naphtha erzeugt wird,
wobei dieses Verfahren die folgenden vorbereitenden Schritte umfasst:
- möglicherweise einen Schritt des Hydrierens von Diolefinen, wobei ein Naphtha mit einem verringerten Gehalt an Diolefinen erzeugt wird;
- möglicherweise einen oder mehrere Schritte des Auftrennens und/oder Erhitzens und/oder Abkühlens;
und die folgenden zusätzlichen Schritte:
- einen Schritt des Abtrennens mindestens einer Teilmenge des hydro-entschwefelten Naphthas, um H₂S zu beseitigen und möglicherweise eine LPG-Fraktion und/oder einen nicht verflüssigbaren Stoffstrom zu erzeugen;
- möglicherweise einen Schritt des Auftrennen des hydro-entschwefelten Naphthas in mindestens zwei Naphtha-Fraktionen.

15. Einheit zur Hydrobehandlung von Naphtha, die einen Reaktionsabschnitt umfasst, welcher mindestens drei Katalysatoren enthält, wobei der Katalysator auf nacheinander angeordnete erste, zweite und dritte Katalysatorschichten aufgebracht ist und jeder der Katalysatoren durch seine "aufgebrachte spezifische Oberfläche" gekennzeichnet ist, welche mit L₁, L₂ beziehungsweise L₃ bezeichnet ist, wobei sie dem Produkt aus seiner massenbezogenen spezifischen Oberfläche und seiner aufgebrachten Dichte entspricht,
wobei die Naphtha-Charge in Gegenwart von Wasserstoff im Reaktionsabschnitt nacheinander mit Folgendem in Kontakt gebracht wird:
- der ersten Katalysatorschicht, wobei der erste Katalysator einen Träger sowie, möglicherweise, eine aktive Phase umfasst, wobei die aktive Phase mindestens ein Metall der Gruppe 6 sowie, vorzugsweise, mindestens ein Metall der Gruppe 9 oder 10 enthält;
- der zweiten Katalysatorschicht, wobei der zweite Katalysator einen Träger sowie eine aktive Phase umfasst, wobei die aktive Phase mindestens ein Metall der Gruppe 9 oder 10 sowie mindestens ein Metall der Gruppe 6 enthält;
- der dritten Katalysatorschicht, wobei der dritte Katalysator einen Träger sowie eine aktive Phase umfasst, wobei die aktive Phase mindestens ein Metall der Gruppe 6 sowie, vorzugsweise, mindestens ein Metall der Gruppe 9 oder 10 enthält;
derart, dass:
- der Gehalt an Metall der Gruppe 6 des dritten Katalysators niedriger als der Gehalt an Metall der Gruppe 6 des zweiten Katalysators ist
- das Verhältnis L₁/L₂ zwischen der "aufgebrachten spezifischen Oberfläche" der ersten Katalysatorschicht und der "aufgebrachten spezifischen Oberfläche" der zweiten Katalysatorschicht mindestens 1,20, vorzugsweise mindestens 1,35 beträgt;
- das Verhältnis L₃/L₂ zwischen der "aufgebrachten spezifischen Oberfläche" der dritten Katalysatorschicht und der "aufgebrachten spezifischen Oberfläche" der zweiten Katalysatorschicht mindestens 1,07, vorzugsweise mindestens 1,20, stärker bevorzugt mindestens 1,35 beträgt.

16. Einheit zur Hydrobehandlung von Naphtha nach Anspruch 15, wobei die erste, die zweite und die dritte Katalysatorschicht in mindestens einen Reaktor eingebracht werden, welcher mit einem katalytischen Festbett und einem axialen Stoffstrom betrieben wird, wobei es sich insbesondere um einen einzigen Reaktor handelt.

## Claims

1. Naphtha hydrotreating process using at least three catalysts, each of said catalysts being **characterized by** its "loaded specific surface area", denoted by L₁, L₂ and L₃, respectively, corresponding to its specific surface area by mass multiplied by its loaded density,
said process comprising three successive steps:
- a first step a) in the presence of the first catalyst, said first catalyst comprising a support and optionally an active phase, said active phase containing at least one Group 6 metal and preferably at least one Group 9 or 10 metal;
- a second step b) in the presence of the second catalyst, said second catalyst comprising a support and an active phase, said active phase containing at least one Group 9 or 10 metal and at least one Group 6 metal;
- a third step c) in the presence of the third catalyst, said third catalyst comprising a support and an active phase, said active phase containing at least one Group 6 metal and optionally at least one Group 9 or 10 metal;
such that:
- the content of Group 6 metal of the third catalyst is less than the content of Group 6 metal of said second catalyst;
- the ratio L₁/L₂ of the "loaded specific surface area" of said first catalyst to the "loaded specific surface area" of said second catalyst is greater than or equal to 1.20, preferably greater than or equal to 1.35;
- the ratio L₃/L₂ of the "loaded specific surface area" of said third catalyst to the "loaded specific surface area" of said second catalyst is greater than 1.07, preferentially greater than or equal to 1.20, more preferentially greater than or equal to 1.35.

2. Process according to Claim 1, in which said first catalyst comprises an active phase, said active phase containing at least one Group 6 metal and preferably at least one Group 9 or 10 metal, so that:
- the content of Group 6 metal of said first catalyst is less than the content of Group 6 metal of said second catalyst.

3. Process according to Claim 2, in which the active phase of the first catalyst contains at least one Group 9 or 10 metal, so that:
- the content of Group 9 or 10 metal of said active phase of the first catalyst is greater than or equal to 0.5% by weight and less than 3% by weight;
- the content of Group 9 plus 10 metal of said active phase of the first catalyst is less than the content of Group 9 plus 10 metal of said second catalyst;
- the content of Group 6 metal of said first catalyst is preferably greater than or equal to 0.5% by weight and/or, preferably, less than or equal to 6% by weight.

4. Process according to Claim 2, in which the active phase of the first catalyst contains at least one Group 9 or 10 metal, so that:
- the content of Group 9 or 10 metal of said first catalyst is greater than or equal to 3% by weight and less than or equal to 9% by weight;
- the content of Group 9 plus 10 metal of the first catalyst is greater than the content of Group 9 plus 10 metal of said second catalyst;
- the content of Group 6 metal of said first catalyst is preferably greater than 6% by weight, more preferably greater than or equal to 7.5% by weight, and/or preferably less than or equal to 10% by weight, more preferably less than or equal to 9.5% by weight.

5. Process according to Claim 1, in which said first catalyst consists of a support without an active phase.

6. Process according to one of the preceding claims, in which the active phase of the third catalyst contains at least one Group 9 or 10 metal, so that:
- the content of Group 9 plus 10 metal of the third catalyst is less than the content of Group 9 plus 10 metal of said second catalyst.

7. Process according to one of the preceding claims, in which the liquid hourly space velocity of the first step is less than or equal to 20 times the overall liquid hourly space velocity, preferably less than or equal to 10 times and/or greater than or equal to 1.33 times the overall liquid hourly space velocity, preferably greater than or equal to 1.6 times said velocity.

8. Process according to one of the preceding claims, in which the liquid hourly space velocity of the second step is less than or equal to 4 times the overall liquid hourly space velocity, preferably less than or equal to 2.5 times and/or greater than or equal to 1.33 times the overall liquid hourly space velocity.

9. Process according to one of the preceding claims, in which the liquid hourly space velocity of the third step is greater than or equal to 5 times the overall liquid hourly space velocity, preferably greater than or equal to 6.66 times and/or less than or equal to 20 times, and preferably less than or equal to 14.29 times the overall liquid hourly space velocity.

10. Process according to one of the preceding claims, in which the first and/or third catalyst is chosen from a catalyst containing molybdenum alone, or nickel and molybdenum, or cobalt and molybdenum, or nickel and cobalt and molybdenum.

11. Process according to one of the preceding claims, in which the second catalyst is chosen from a catalyst containing nickel and molybdenum, or cobalt and molybdenum, or nickel and cobalt and molybdenum.

12. Process according to one of the preceding claims, in which said naphtha comprises hydrocarbons comprising from 10 to 50 000 ppm by weight of one or more sulfur-based compounds.

13. Process according to one of the preceding claims, in which said naphtha comprises a cracked naphtha feedstock, alone or as a mixture with other naphtha feedstocks.

14. Naphtha hydrotreating process, comprising a hydrotreating process according to one of the preceding claims, producing a hydrodesulfurized naphtha,
said process comprising the following preliminary steps:
- an optional step of hydrogenation of diolefins, producing a naphtha with a reduced content of diolefins;
- one or more optional steps of separation and/or heating and/or cooling;
and the following additional steps:
- a step of separation of at least part of the hydrodesulfurized naphtha to remove H₂S and optional production of an LPG fraction and/or of an uncondensable stream;
- an optional step of separating the hydrodesulfurized naphtha into at least two naphtha fractions.

15. Naphtha hydrotreating unit comprising a reaction section containing at least three catalysts, said catalyst being loaded onto first, second and third successive layers of catalyst and each of said catalysts being **characterized by** its "loaded specific surface area", denoted by L₁, L₂ and L₃, respectively, corresponding to its specific surface area by mass multiplied by its loaded density,
said naphtha feedstock being successively placed in contact, in the presence of hydrogen, in said reaction section with:
- the first layer of catalyst, said first catalyst comprising a support and optionally an active phase, said active phase containing at least one Group 6 metal and preferably at least one Group 9 or 10 metal;
- the second layer of catalyst, said second catalyst comprising a support and an active phase, said active phase containing at least one Group 9 or 10 metal and at least one Group 6 metal;
- the third layer of catalyst, said third catalyst comprising a support and an active phase, said active phase containing at least one Group 6 metal and preferably at least one Group 9 or 10 metal;
such that:
- the content of Group 6 metal of the third catalyst is less than the content of Group 6 metal of the second catalyst;
- the ratio L₁/L₂ of the "loaded specific surface area" of said first layer of catalyst to the "loaded specific surface area" of said second layer of catalyst is greater than or equal to 1.20, preferably greater than or equal to 1.35;
- the ratio L₃/L₂ of the "loaded specific surface area" of said third layer of catalyst to the "loaded specific surface area" of said second layer of catalyst is greater than 1.07, preferentially greater than or equal to 1.20, more preferentially greater than or equal to 1.35.

16. Naphtha hydrotreating unit according to Claim 15, in which the first, second and third layers of catalyst are loaded into at least one reactor operating with a fixed catalytic bed and in axial flow, notably a single reactor.
